# EUROPEAN PATENT SPECIFICATION

(11) **EP 0 211 420 B1**
(45) Date of publication and mention of the grant of the patent: **28.12.1994**
(21) Application number: 86110679.7
(22) Date of filing: 01.08.1986
(51) Int. Cl.: G06F 15/16

(54) **Data distribution apparatus and method**
Datenverteilungsvorrichtung und -Verfahren
Appareil et méthode de distribution de données

(30) Priority: 02.08.1985 US 762098
(43) Date of publication of application: 25.02.1987
(73) Proprietor: WANG LABORATORIES INC., Lowell, MA 01851 (US)
(72) Inventor: Valenti, Andrew Paul, Concord MA 01742 (US)
(74) Representative: Behrens, Dieter, Dr.-Ing.

(56) References cited:
- EP-A- 0 108 899
- EP-A- 0 109 614
- US-A- 4 032 899
- PROCEEDINGS OF THE NATIONAL ELECTRONICS CONFERENCE, vol. 37, 1983, pages 309-315, Illinois, US; A. BETTENCOURT et al.: "Net - a new Unix based transparent networking system"
- IEEE TRANSACTIONS ON COMPUTERS, vol. C-33, no. 10, October 1984, pages 895-905, New York, US; D.L. TUOMENOKSA: "Task preloading schemes for reconfigurable parallel processing systems"
- AFIPS - CONFERENCE PROCEEDINGS, 1983, NATIONAL COMPUTER CONFERENCE, Anaheim, California, 16th-19th May 1983, pages 203-217, Afips Press, Arlington, US; A. NORMAN et al.: "Empact: A distributed database application"
- PATENT ABSTRACTS OF JAPAN, vol. 8, no. 228 (P-308)[1665], 19th October 1984; & JP-A-59 108 156 (FUJITSU K.K.) 22-06-1984
- COMPCON 82 - HIGH TECHNOLOGY IN THE INFORMATION INDUSTRY, 22nd-25th February 1982, pages 398-402, IEEE, New York, US; L.H. LANDWEBER et al.: "Use of multiple networks in CSNET"

## Description

### Cross References to Related Applications

### Background of the Invention

### Field of the Invention

The present invention relates to data processing systems and more particularly to apparatus and methods used to transfer data from one data processing system to another.

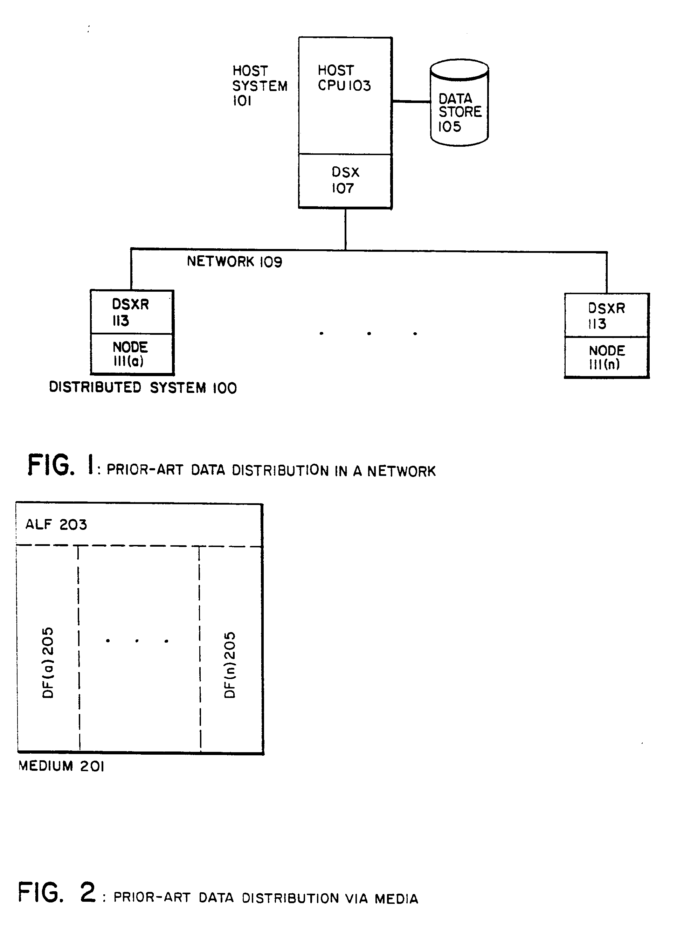

### Description of the prior art: Figures 1 and 2.

Ways of transferring data from one computer system to another are as old as computer systems themselves. Two general methods of transferring data have evolved: if each system has access to a network, the network may be used to transfer the data. If no network is available, the data is transferred by means of media such as punched cards, punched tape, magnetic tape, or magnetic disks. In both cases, what to do with the transferred data was at first left completely up to the system which received it.

However, this approach became progressively less satisfactory for two reasons: first, the separate computer systems became components of a single distributed computer system and consequently were required to operate in close cooperation with one another. Second, as computer systems became more numerous, their users were more and more often lay people who had considerable difficulty with the complexities of organizing the transferred data into a functioning entity. Often, the problems arose together. For example, a large company might operate a distributed computer system with remote component systems which were operated by sales, service, clerical, or secretarial personnel. In such systems, such non-technical people might be required to receive and install complex data bases and programs or updates to data bases or programs on the remote systems. Further, mistakes made in installation might affect the performance of the entire distributed system.

The prior art has developed two techniques to deal with the problems which have arisen in the distribution of data. One of them is used to distribute data to component systems connected by a network; the other is used to distribute data by means of media. The first technique is exemplified by the IBM Distributed System Executive, described in Distributed Systems Executive Version 3 General Information, GH 19-6394-1, International Business Machines Corporation, 1984. Figure 1 provides an overview of the Distributed Systems Executive (DSX). As shown in that figure, distributed system 100 in which DSX is used consists of a host system 101 including host CPU 103, data store 105, and DSX software 107 which runs on host CPU 103. Host system 101 is connected by means of network 109 to one or more node systems 111(a) through 111(n). Each node 111 has executing on it DSX Receive (DSXR) software 113. Parameters provided by the operator of host system 101 to DSX 107 describe the configuration of network 109 and nodes 111.

Data is transferred from host system 101 to a node 111(a) in distributed system 100 as follows: a user of the host system specifies to DSX the kind and name of the data to be transferred, the nodes to which the transfer is to be made. and conditions of the transfer, for example, when the transfer is to be made or whether it depends on the successful completion of a preceding transfer. At the time specified for the transfer, DSX initiates a session on network 109 between host system 101 and the node 111(a) to which the transfer is to be made. DSXR 113 in node 111(a) responds to the initiated session and prepares to receive the transferred data. To perform the actual transfer, DSX 107 provides a protocol containing the data to be transferred to network 109, which transmits the protocol to node 111(a). DSXR 113 responds to the protocol and performs whatever actions are required to install the data being sent in node 111(a).

As can be seen from the above description, DSX has a number of inflexibilities. First, the system in which it is used must be hierarchical. A host 101 cannot be a node 111 and host system 101 always provides data and the nodes 111 always receive data. Further, in the system shown in Figure 1, transfers may be initiated only by host system 101. Second, DSX uses a special protocol provided by network 109 to transfer the data to nodes 111. Consequently, DSX may be used only with network 109 and not with other networks which do not provide such a protocol. Third, installation occurs in DSX at the time the protocol is received in node 111, even though that time may be inconvenient for node 111.

In an effort to overcome some of the inflexibility of the hierarchical system of figure 1, the prior art has provided a variation, known as Distributed Systems Network Executive (DSNX), in which certain special nodes 111 are DSNX nodes 111. DSNX nodes 111 may make data available for transfer from DSNX node 111 to host system 101. DSX 107 then initiates a session with DSNX node 111 and transfers the data from DSNX node 111 to host 101. From there, DSX 107 can transfer the data to nodes 111 in the manner just described. Without DSNX, all data to be transferred to nodes 111 must be developed on host system 101; with DSNX, data to be transferred may be developed on a DSNX node 111 and DSX can retrieve the data from that node to host 101 and transfer it from there to other nodes 111. However, even in DSNX, nodes and hosts are distinct and only host 101 can initiate a transfer.

The technique used when data is distributed on media is to include as part of the data a program which correctly installs the remainder of the data in the media on the computer system for which it is intended. Figure 2 presents a schematic overview of the contents of the media when this approach is used. Medium 201 may be any medium such as punched tape or cards, magnetic tape, or magnetic disks used to transfer data between computer systems. The data is contained in data files (DF) 205 (a) through (n); the loading program is contained in automatic loading file (ALF) 203. The user of the computer system loads ALF file 203 from the media and then executes it on the computer system. The program in ALF file 203 then loads files DF 205(a) through (n).

An essential distinction between this technique and prior-art distribution via a network is that here, the recipient computer system has an active instead of a passive role. Because of this distinction, data distributed across a network and via media cannot presently be dealt with in the same manner by the recipient system. This fact in turn increases the expense and complexity of data distribution, particularly where a distributed system has some component systems which are connected by a network and others which are not or where the cost of using a network is an important consideration in data distribution. An additional problem of prior-art media distribution is that loading programs of the type of ALF 203 are generally specific to the data contained in the medium, not to the system which is receiving the data. For example, the loading program may set up file names or directory systems which are inconsistent with those already present in the recipient computer system. Depending on how the recipient computer system handles such conflicts, the result may be a failure of the installation program or a loss of data in the recipient computer system.

Accordingly it is an object of the invention as defined in the appended claims to provide an apparatus for distributing data in a non-hierarchical distributed computer system between computer component systems, typically to distribute data to remote components, obviating the above-mentioned restrictions of the prior art systems. Such apparatus should be suitable to be implemented with systems in a network and with systems where the data is transferred on media. If used in a non-hierarchical network the apparatus should not require special network protocols. The apparatus should include improved means for specifying how the data to be distributed is to be installed at the destination.

By using the apparatus of the invention, data may be distributed accross connected component systems of a non-hierarchical distributed computer system and may be distributed in the same manner to component systems, which receive the data via a network, as to component systems which receive the data on media.

The data distribution apparatus includes a source for the data to be distributed, a destination to which it is to be distributed, apparatus which creates a system data descriptor describing the data to be distributed, and retrieval apparatus which has access to the source and the destination and which receives the system data descriptor and responds thereto by transferring the described data from the source to the destination.

The source and destination may be any means for storing data and will typically be computer system memory, disk drives, or media. The data distribution and retrieval apparatus will typically be processors executing on the one hand a program for creating the data descriptor and on the other hand a program for receiving the data descriptor, reading it, and fetching the data specified therein. Various configurations are possible. When the invention is employed in a system having a number of processors, the distribution apparatus may be part of a central computer system and the retrieval apparatus may be part of a remote computer system. In some such systems, certain processors may have both the distribution apparatus and the retrieval apparatus and consequently function as both central and remote processors. In other such systems, the source of all software may be a host system. The data descriptor and the data may be transferred over a network or may both be included on media prepared by a central system and sent to a remote system. In computer systems having file systems, the data descriptor and the data may both be contained in files and may be transferred in any manner available to the system for the transfer of files.

In a preferred embodiment, the data distribution apparatus is used to distribute software, i.e., executable program files and certain other files containing data necessary for execution of the executable program files. The software is distributed in the form of packages. A package is all of the executable program and other files necessary to make a software product such as an editor program or an application program work. The package may be a new package, a replacement for an existing package, or an update of an existing package. In the latter case, only those files required to update the existing package are distributed.

The source in a preferred embodiment consists of an inventory library for the files containing the data to be transferred and a data base describing the contents of the inventory library. The destination consists of a holding library in which the software is to be stored until it is to be used, a run library in which software being executed is installed, and a data base describing the contents of the holding and run libraries.

The data descriptor may contain not only a description of the data to be distributed, but also retrieval and installation information. Retrieval information may include the time and date at which the data is to be retrieved and actions to be taken if a copy of the data already exists at the destination. Installation information may include the time and date of installation.

The apparatus of the invention includes a system data descriptor that has information expressive of a first time value for indicating when the data is to be distributed. It also has a system retrieval means that includes means for receiving the system data descriptor from the system data distributing means and for automatically responding thereto by transferring the data to be distributed from the source to the destination, at a time corresponding to the first time value expressed by the system data descriptor. Both a time that a data transfer will be made, and a time that an installation of the data will occur, are precisely specified by information contained within the system data descriptor that is associated with the data. The prior system has no such capability and, hence, would require greater operator or system intervention.

Other objects and advantages of the present invention will be understood by those of ordinary skill in the art after referring to the detailed description of a preferred embodiment contained herein and to the drawings, wherein:

### Brief Description of Drawings

- Fig. 1: is a block diagram of prior-art data distribution in a network.
- Fig. 2: is a diagram of prior-art data distribution via media.
- Fig. 3: is a conceptual block diagram of the data distribution apparatus of the present invention.
- Fig. 3A: is a diagram of the conceptual structure of the data descriptor of the present invention.
- Fig. 4: is a conceptual block diagram of data distribution using the present invention when the data is distributed using media.
- Fig. 5: is a conceptual block diagram of data distribution using the present invention in a distributed system.
- Fig. 6: is a block diagram of the structure of the present invention in a preferred embodiment.
- Fig. 7: is a block diagram of the components of DISTC 709 and SC 703.
- Fig. 8: shows the form of records in files in IDL 803.
- Fig. 9: shows a preferred embodiment of DDF 835.
- Fig. 10: is a detailed diagram of DDHDR 1003
- Fig. 11: is a flowchart showing the production of DDF 835 in CS 701
- Fig. 12: is a detail of block 1213 of the flowchart of Fig. 11.
- Fig. 13: is a block diagram of the components of DC 709.
- Fig. 14: is a block diagram of the components of RETRC 711.
- Fig. 15: shows a detail of the form of DRQR 1611 in a preferred embodiment of RETRC 711.
- Figs. 16 and 16A: are a flowchart showing the processing of DDF 835 by SDSRETR 1601.
- Fig. 17: is a flowchart showing a detail of block 1843 of Fig. 16.
- Figs. 18 and 18A: are a flowchart showing a detail of blocks 2011 and 2015 of Fig. 17.
- Fig. 19: is a flowchart showing a detail of block 2121 of Fig. 18.

### Description of a Preferred Embodiment

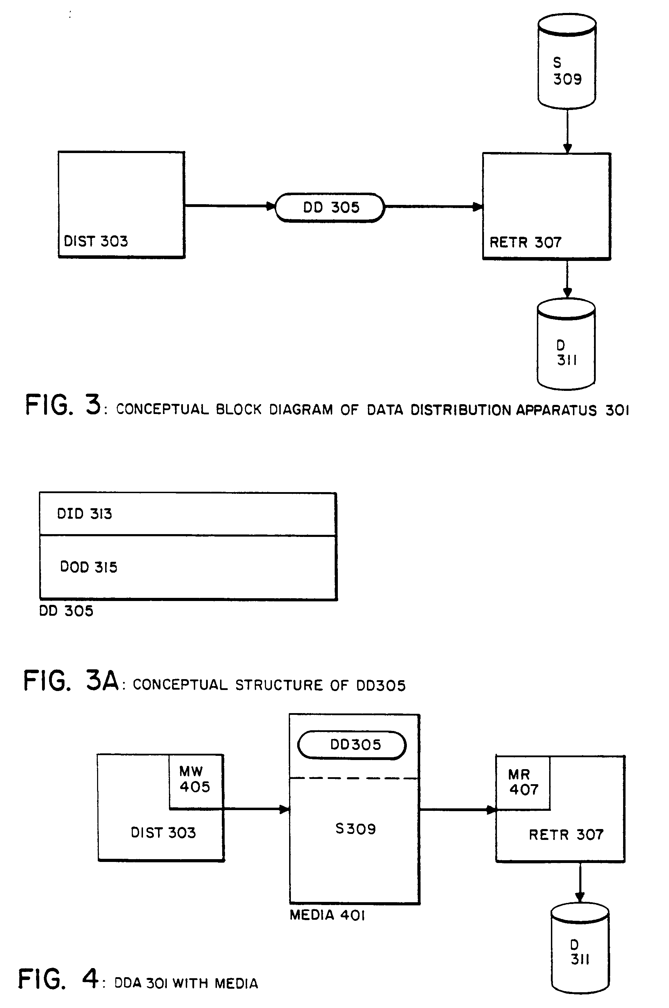

### Overview of Data Distribution Apparatus 301: Figs. 3 and 3A

Figure 3 is a conceptual block diagram of the present invention, data distribution apparatus (DDA) 301. DDA 301 has five components: distributor (DIST) 303, data descriptor (DD) 305, retriever (RETR) 307, data source (S) 309, and data destination (D) 311. DIST 303 and RETR 307 may be special apparatus or one or more computer systems executing programs. S 309 and D 311 are data storage devices or media which are accessible to RETR 307. DD 305 describes data in S 309 which is to be retrieved therefrom by RETR 307 and stored in D 311. The apparatus operates as follows: DIST 303 produces DD 305. RETR 307 receives DD 305 and responds to it by transferring the described data from S 309 to D 311. DD 305 may be communicated between DIST 303 and RETR 307 by a physical connection between the two, by a network connecting the two, or by means of media. In the latter case, DIST 303 writes DD 305 onto the media, the media are transported to RETR 307, and RETR 307 reads DD 305 from the media.

DD 305 is shown in conceptual detail in figure 3A. DD 305 is a data structure which must contain data identifier (DID) 313, which identifies the data to be distributed from S 309 to D 311, and may also contain destination operation descriptor (DOD) 315, which contains information used by RETR 307 to perform various operations connected with retrieving the data to be distributed and storing it in D 311. Depending on how the system is configured in which DDA 301 is used, DID 313 may contain information identifying S 309 as well as the data contained therein and DOD 315 may contain information identifying a particular portion of D 311. Only DID 313 is required for RETR 307 to successfully distribute data from S 309 to D 311, but the addition of DOD 315 to DD 305 greatly increases the flexibility and efficiency of operation of the present invention.

### DDA 301 in Systems which Distribute Data via Media: Fig. 4

Fig. 4 shows one way in which DDA 301 may be employed to distribute data via media. As previously mentioned, S 309 may be media, and DD 305 may also be sent on media from DIST 303 to RETR 307. It is often advantageous to place the data to be distributed and DD 305 on the same media, producing media 401, containing both DD 305 and S 309. In a system in which this is done, DIST 303 will have access to media writer (MW) 405, which may be a tape drive, a disk drive, or the like which can write the selected medium, and RETR 307 will have access to media reader (MR) 407, which can read the media written by MW 405. The operation of the system of Figure 4 is straightforward: DIST 303 writes DD 305 and the data to be distributed to media 401, media 401 is transported to RETR 307, and RETR 307 first reads DD 305 and then uses the information in DD 305 to retrieve the data from Media 401 and then install it in D 311.

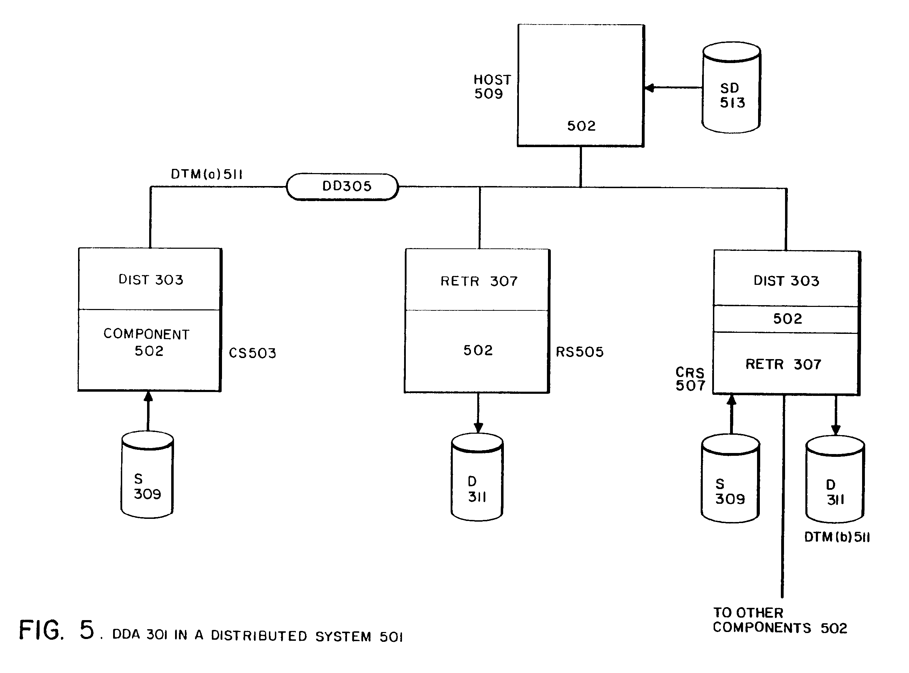

### DDA 301 in a Distributed Data Processing System: Fig. 5

DDA 301 may also be employed in a distributed data processing system, i.e., a system consisting of several component computer systems. DDA 301 in a distributed data processing system is shown in figure 5. Distributed System 501 contains a number of component computer systems 502 which are connected by a data transfer means (DTM(a)) 511 such as a network. One of the component systems is host 509, which serves only to store the data being distributed. That data is labelled SD 513 in figure 5. Another of the component systems is further connected by another DTM(b) 511 to other components 502. It is to be understood that distributed system 501 is purely exemplary and that DDA 301 may be employed in systems 501 containing more or fewer components and having different configurations.

When DDA 301 is implemented in system 501, component systems 502 may function as DISTs 303, RETRs 307, or as both DISTs 303 and RETRs 307. Any system which functions as a DIST 303 is termed a central system (CS) 503; any system which functions as a RETR 307 is termed a remote system (RS) 505; a system which functions as both is termed a central-remote system (CRS) 507. Further, storage accessible to component systems 502 may serve as a D 311 for one data transfer-and a S 309 for another. For example, RETR 307 in CRS 507 may receive a DD 305 from a different CS 503 via DTM(a) 511 and respond thereto by transferring data from Host 509 to storage accessible to the CRS 507. For that transfer, consequently, the storage functions as D 311. Thereupon, DIST 303 may provide a DD 305 via DTM(b) 511 to another component 502, and RETR 307 in that component may respond to the new DD 305 by transferring the data from the storage accessible to the CRS 507 to another D 311. Thus, for the second transfer, the storage accessible to CRS 507 functions as a S 309.

DDA 301 in system 501 functions as follows: a given DIST 303 in system 501 produced DD 305 describing the data to be transferred and transfers DD 305 via DTM 511 to a RETR 307 having access to both S 309 containing the data and D 311 to which it is to be transferred. RETR 307 received DD 305 and using the information contained in DD 305, employs DTM 511 to transfer the designated data from S 309 to D 311. In system 501, DD 305 may specify data accessible directly from a CS 503 or accessible from a host 509.

If DIST 503 and RETR 307 are both in the same CRS 507, the DD 305 created by DIST 303 may be used by RETR 307 in that same CRS 507. One situation in which this may occur is when CRS 507 obtains data from SD 513 for further distribution via a DTM 511 connected to CRS 507. In that case, DIST 303 creates a first DD 305 which is responded to by RETR 307 to transfer the data from host 509 to CRS 507 and then creates additional DDs 305 which are sent to the components 502 connected to DTM(b) 511.

In a second case, the transfer may not involve DTM 511, but may be a purely local transfer from S 309 accessible to CRS 507 to D 311 accessible to CRS 507. In that case, DIST 303 simply makes DD 305 and provides it to RETR 307 in the same CRS 507, which then performs the transfer from the local S 309 to the local D 311. System 501 may also contain component systems (not shown) which are not connected to DTM 511, but to and from which data is transferred in the manner described for DDA 301 in a system using media. Thus, in system 501, DDA 301 may be used to distribute data using DTM 511 or media from a CS 503 or a host 509 to a RS 505 or to distribute data locally within a CRS 507. Further, any component system 502 including a DIST 303 may provide a DD 305 to any component system 502 including a RETR 307. Host 509 is thus merely optional and is not a required component of System 501.

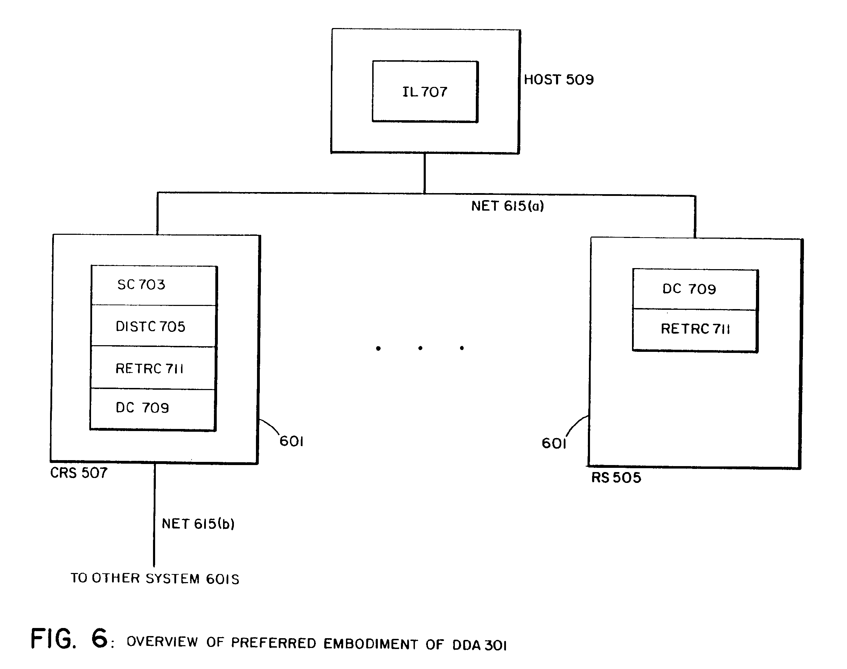

### Overview of Preferred Embodiment of DDA 301: Fig. 6

Figure 6 is a block diagram of DDA 301 embodied in a distributed system with component systems including a host 509 having an IBM 360/370 architecture and computer systems 601 which function as DISTs 303 and RETRs 307 and provide storage for S 309 and D 311. The component systems are connected via net 615(a). One of the component systems, CRS 507, is further connected to other systems 601 via net 615(b). Host system 509 includes inventory library (IL) 707 which contains data to be distributed to RSs 505 and to CSs 503 for further distribution to other component systems. The data is stored as files, and DD 305 is implemented in a file. Consequently, net 615 is required only to be able to transfer files between the component systems.

CRS 507 in the preferred embodiment includes three groups of components relevant to DDA 301:
Store components (SC) 703, the program and data files necessary to implement S 309 for CRS 507;
Distribution components (DISTC) 705, the program and data files necessary to implement DIST 303 for CRS 507;
Retrieve components (RETRC) 711, the program and data files necessary to implement RETR 307 for CRS 507.
Destination components (DC) 709, the program and data files necessary to implement D 311 for CRS 507;

RS 505 contains two sets of components:
Destination components (DC) 709, the program and data files necessary to implement D 311 for RS 505;
Retrieve components (RETRC) 711

Files containing data to be operated on by system 601 are stored on disks. The disks are logically subdivided into volumes which in turn are logically subdivided into libraries, to which the individual files belong. Each file is uniquely identified by specifying a pathname which consists of the file's name, the name of the library to which it belongs, and the name of the volume to which the library belongs. A file is moved from one volume to another by physically copying it from the first volume to the second volume, but may be placed in a different library simply by changing the library name in the file's pathname.

In a preferred embodiment, the program files are object files produced by compilation of source files written in the COBOL language. However, the program files may be produced by compilation from other high level languages, by assembling code written in assembly languages, or by interpreting high level code. The invention is in no way dependent on the kind of high level code used or whether the code is executed directly on a CPU or is interpreted by an interpreter executing on the CPU.

Operation of the system of Figure 6 is similar to that of system 501: DISTC 705 in CRS 507 produces DDs 305 which it provides to RETRCs 711 in CRS 507, RS 505, or other systems 601 connected to nets 615(a) or 615(b). Depending on the contents of DD 305, CRS 507 and RS 505 may retrieve data from either IL 707 in host 509 or the S 309 implemented by SC 703; systems connected to net 615(b) may retrieve data from CRS 507. Data retrieved by CRS 507 is stored in the S 309 implemented by SC 703 for further distribution; data retrieved by RS 505 is stored in D 311 implemented by DC 709.

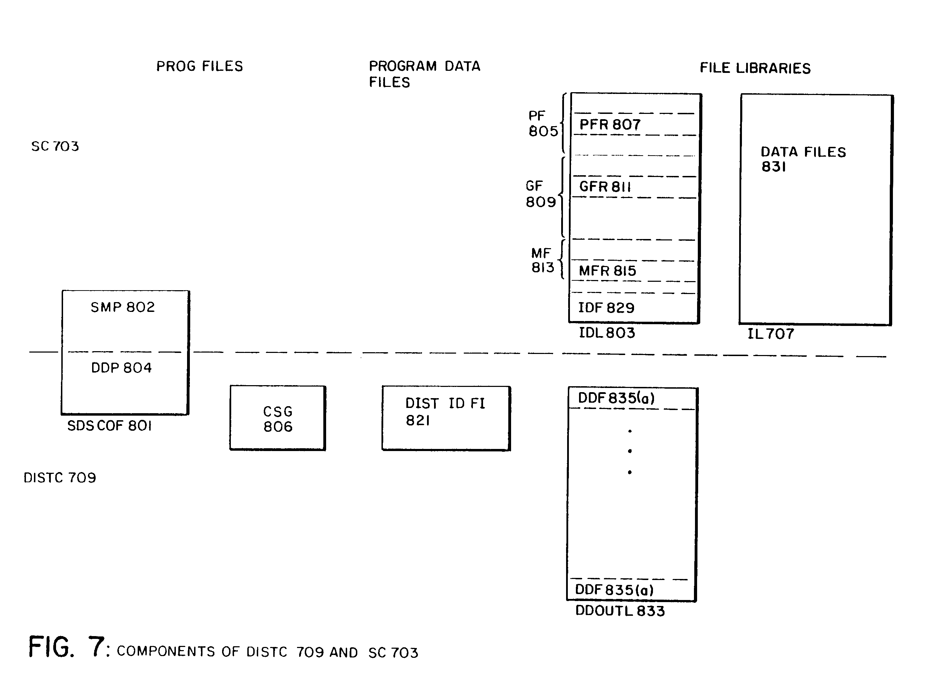

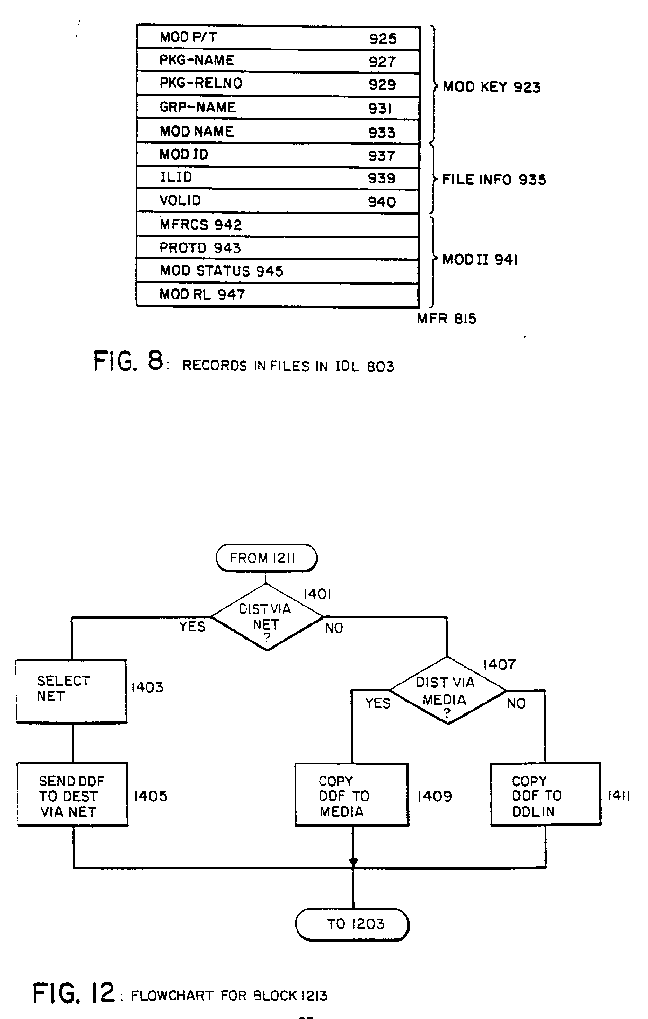

### SC 703: Figs. 7 and 8

The components of SC 703 in a preferred embodiment are shown in Figure 7. The components consist of files and libraries stored on disks of the computer system in which S 309 is implemented. Beginning with SDSCOF 801, SDSCOF is a program file containing routines including source manipulation programs (SMP) 802. When the routines in SMP are executed by CPU 605, S 309 is created and manipulated as required for operation of CRS 507. S 309 itself is implemented by means of two libraries 621 created and maintained by SMP 802. The first of these is Inventory Library (IL) 707. IL 707 may be on the same component system as the remainder of SC 703 or may be on Host 509, with the remainder of SC 703 on the component system. The data to be transferred to other systems 601 by DDA 301 is contained in data files 831 in IL 707. In a present embodiment, the data files contain software. Data files 831 are identified by means of unique identifiers.

The second library 621 is inventory directory library (IDL) 803. IDL 803 organizes data files 831 in IL 707 into software packages. Each package contains one or more groups, and each group contains one or more modules. Each module corresponds to one of the data files 831 in IL 707. A group of modules is a set of modules which, when installed in a RS 505, must all reside on the same volume 619.

IDL 803 contains four indexed files: package file (PF) 805, group file (GF) 809, module file (MF) 813, and identifier file (IDF) 829. IDF 829 contains records which relate the unique identifiers for data files 831 in IL 707 to alphanumeric names for the files. The use of IDF 829 to relate a file's unique identifier to an alphanumeric name for the file permits storage of more than one version of a file with a given alphanumeric name in data files 831. The remaining indexed files contain records identifying the packages whose modules are stored in data files 831. PF 805 contains one package file record (PFR) 807 for each package having files in IL 707, GF 809 contains one group file record (GFR) 811 for each group having files in IL 707, and MF 813 contains one module file record (MFR) 815 for each data file in data files 831. Details of MFR 815 are shown in Figure 8.

In MFR 815, MOD KEY 923 contains MOD P/T 925, indicating whether the module is a production or test module and fields 927 through 933 containing the package name, package release number, group name, and module name. MOD II 941 contains module installation information. Included in that information are protection information (PROTD 943), MFRCS 942, and MOD RL 947. PROTD 943 describes how the module represented by MFR 815 may be accessed when installed. MFRCS 942 permits checking to determine whether the file containing the module represented by MFR 815 has been modified. MOD RL 947 has no function in PFRs 807 in IDLs 803, but is used when a module is installed in RS 505 or CRS 507 to specify the library in which it is installed.

In addition, MFR 815 contains file info 935, by means of which a file containing the module represented by MFR 815 may be located. In a preferred embodiment, file info 935 includes MOD ID 937, which is the ID number used in IL 707 for the file represented by MFR 815, IL ID 939, which specifies IL 707, and VOL ID 940, which specifies the volume in which IL 707 is located.

### DISTC 709: Figures 7, 9, 10, and 11

DISTC 709 in a preferred embodiment consists of data descriptor production routines (DDP) 804 in SDSCOF 801, outgoing data descriptor library (DDOUTL 833), which contains data descriptor files (DDF) 835, a preferred embodiment of DD 305, and distribution ID File 821, which contains unique identifiers assigned to DDFs 835 which are placed in DDOUTL 833. The routines in DDP 804 receive information from the user of system 601 concerning one or more packages to be distributed, use that information and information in IDL 803 for the packages to construct a DDF 835 for the packages, and place DDF 835 onto net 615 or into media 401 containing the package modules.

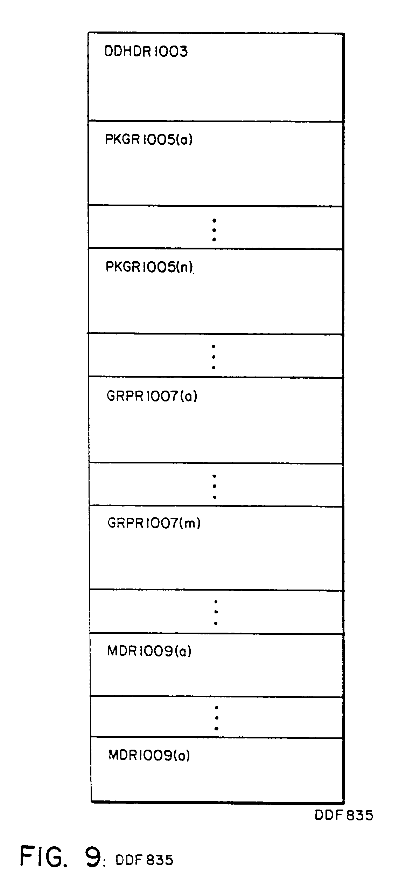

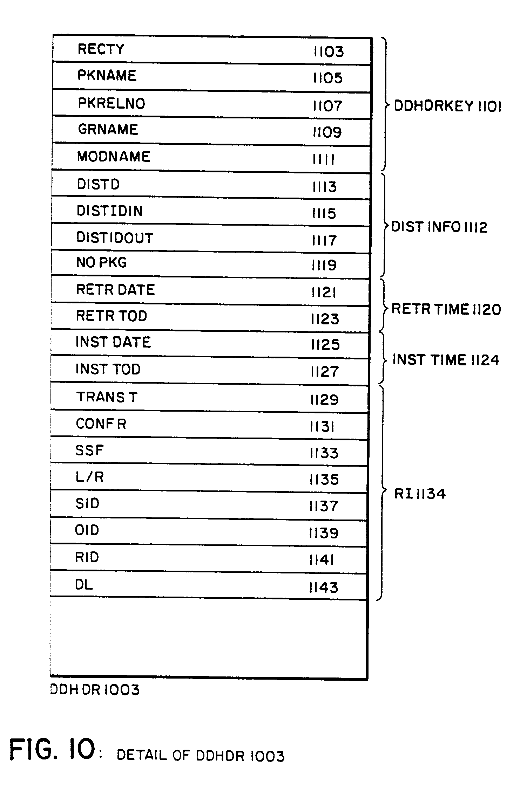

DDF 835, a preferred embodiment of DD 305, is shown in detail in figures 9 and 10. Each DDF 835 is a single file which represents one or more software packages. The file is an indexed file with four kinds of records: a single DD header record (DDHDR) 1003, a package record (PKGR) 1005 for each package represented by DDF 835, a group record (GRPR) 1007 for each group in the packages, and a module record (MDR) 1009 for each module in the packages. Thus, DDF 835 is effectively a copy of the information in IDL 803 for each of the packages represented by DDF 835 combined with DDHDR 1003, which contains the information required for the actual distribution.

Beginning with the information about the packages, in a preferred embodiment, PKGRs 1005 for all of the packages are grouped together, followed by GRPRs 1007 for all of the groups, followed by MDRs 1009 for all of the modules. The GRPRs 1007 and MDRs 1009 for a given package in a DDF 835 may correspond to all or any part of the groups and modules for the package specified in IDL 803. This property permits DDF 835 to be used to distribute partial revisions of existing packages as well as complete revisions and new packages. Since only those files needed for the partial revision are specified in the DDF 835, only those files are fetched from IL 707.

DDHDR 1003 is illustrated in detail in Figure 10. The information in DDHDR 1003 may be divided into five groups of fields:
DDHDRKEY 1101 is the key by which DDHDR 1003 may be accessed;
DIST INFO 1112 contains information regarding the distribution of DDF 835 to RS 505;
RETR TIME 1120 specifies the time at which RETR 307 in RS 505 should retrieve the packages represented by DDF 835;
INST TIME 1124 generally contains installation information relevant to the installation of the packages in RS 505;
RI 1134 generally contains retrieval information required to retrieve the packages from S 309 where they are stored.

Beginning with DDHDRKEY 1101, each of the other records in DDF 835 contains a similar key. In these keys, RECTY 1103 indicates whether the record is a DDHDR 1003, a PKGR 1005, a GRPR 1007, or a MDR 1009. Fields 1105 through 1109 are filled out to the degree required for the kind of record. Thus, in DDHDR 1003, only RECTY 1103 is filled out.

DIST INFO 1112 contains information about the distribution of DDF 835 to RS 505 which receives DDF 835. DISTD 1113 indicates the date of distribution, DISTIDIN 1115 is a unique identifier given to DDF 835 by DDP 804 when it creates the file, and DISTIDOUT 1117 is a unique identifier given to DDF 835 when it is received at RSs 505. NO PKG 1119 specifies the number of packages represented by DDF 835. RETR TIME 1120 consists of fields 1121, which specifies the date upon which RS 505 is to retrieve the packages represented by DDF 835, and 1123, which specifies the time of day of retrieval. INST TIME 1124 contains fields 1125 and 27, specifying the date and time of day at which the packages will be automatically installed at RS 505. In a present embodiment, if the time of day has the value 99:99, the packages will not be automatically installed, but may instead be installed by the operator of RS 505. RI 1134 includes TRANS T 1129, which is an estimate of the time it will take to transfer the packages represented by DD 835 to RS 505, CONFR 1131, which specifies what actions are to be taken when a package with the same name as the one being retrieved already exists in the D 311 to which the packages are being retrieved, and SS flag 1133, which is used to indicate whether the transferred files may be deleted after copies of them have been made in D 311.

Further, L/R 1135 specifies whether the files are to be obtained locally or remotely and whether distribution is to be to an IL 707 or a holding library at a CRS 507 or an RS 505. When DDF 835 specifies retrieval from a host system 509, SID 1137 identifies the host system 509. OID 1139 identifies the CRS 507 which created the DDF 835 and from which the packages may be retrieved if there is no host 509 specified, and RID 1141 specifies the destination system CRS 507 or RS 503. Other information in DDHDR 1003 is not relevant to the present invention and will not be further described.

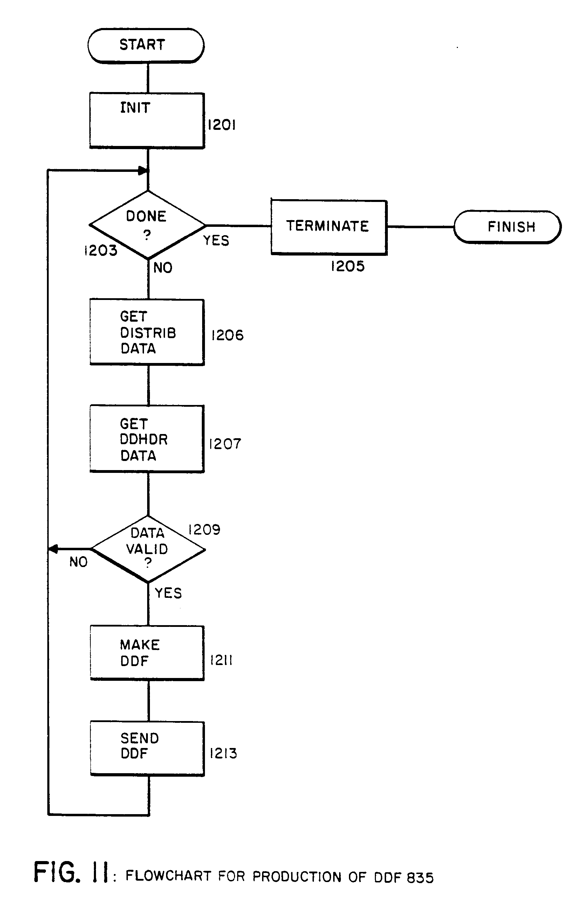

### Operation of DDP 804: Figures 11 and 12

Operation of DDP 804 to produce DDF 835 for one or more packages is shown in the flowcharts of figures 11 and 12. Figure 11 presents an overview of the program. The program is a loop which continues producing DDFs 835 until the user of DDP 804 indicates he is finished. The first step, shown in box 1201, is to initialize. This involves opening, DISTID Fl 821, IDL 803, and DDOUTL 833 and initializing using default values. The first steps in the loop involve getting the data from DISTC 709 and the user required to construct and send a given DDF 835. In a present embodiment, data from the user is obtained by presenting him with menu screens. The user specifies the data by selecting items from the screens or filling in fields on the screens. Default choices for items and values for fields are provided.

As shown in blocks 1206 and 1207 of the flowchart, there are two general categories of data: that are required for the distribution of the DDF 835 and that are required to fill in DDHDR 1003. The distribution data collected in block 1206 includes values provided by DDP 804 and the user. DDP 804 provides a unique identifier for the distribution which is stored in DISTIDFI 821 and later in DISTIDIN field 1115 of DDHDR 1003. The user fills in menus to provide the name of the package to be distributed, whether it is an update package, how the package is to be distributed, i.e., by net 615, locally, or by media, and the RS 505s to which DDF 835 is to be distributed. The DDHDR data collected in block 1207 includes the contents of RETR TIME 1120, INST TIME 1124, and RI 1134. Where the user does not provide a value, DDP 804 employs a default value. Next, in block 1209, the program checks the received data for validity and consistency. For example, it checks the fields which specify times and dates to make sure that the times and dates are possible times and dates and checks CONFR 1131 to verify that the conflict resolution specified agrees with the other information collected for DDHDR 1003. If the collected data is invalid, the user is notified of the error and if he wishes to continue, steps 1206 and 1207 are repeated. If it is valid, the program proceeds to step 1211, in which it makes DDF 835 in DDOUTL 833. When DDF 835 is finished, the program sends DDF 835 in the manner specified by the user in block 1206 (block 1213). After DDF 835 has been sent, DDP 804 returns to decision block 1203 to begin preparation of the next DDF 835. When the user is finished, decision block 1203 transfers control to block 1205, which closes the files opened at the beginning of the program and performs other actions necessary to end execution of DDP 804.

Figure 12, shows in detail the processing performed in block 1213. In a preferred embodiment, the user may in step 1206 select among network transfer of DDF 835, transfer via media, and local transfer in the component system 502 which produced DDF 835. If the user specified network transfer, decision box 1401 transfers control to boxes 1403 and 1405, in which the specified network type is selected and DDF 835 sent via that network type to a library 621 called data descriptor in library (DDINL) on the specified RS 505. If the user specifies a non-network transfer, decision block 1401 transfers control to decision block 1407. If transfer via media was selected, DDF 835 is copied in block 1409 to a file which will later be copied to the media together with the module files for the package; if local transfer was selected, DDF 835 is copied to DDINL on the system which produced DDF 835.

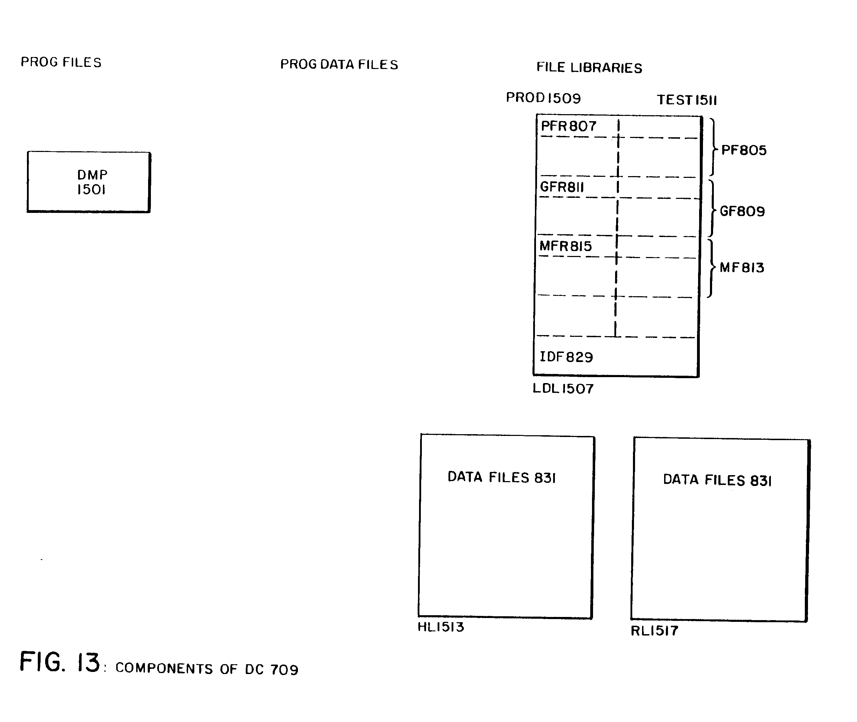

### DC 709: Fig. 13

The components of DC 709, which implements D 311 in a preferred embodiment, are shown in figure 13. The components of DC 709 are generally parallel to those of SC 703, and like them, consist of program and data files stored on disks of a computer system 601 serving as a RS 505. Beginning with destination manipulation program (DMP) 1501, when routines in DMP 1501 are executed by the CPU D 311 is created and manipulated as required for operation of RS 505. DMP 1501 in the preferred embodiment is an interactive program which employs menus to obtain the information required to set up and manipulate D 311. Among the operations which an operator may perform interactively using DMP 1501 are manual installation of retrieved software so that it can be executed in RS 505, removal of installed software so that it can no longer be executed, and swapping, in which the status of selected software is changed from experimental software to production software.

D 311 itself is implemented by means of three libraries created and maintained by DMP 1501. Two of the libraries, holding library (HL) 1513 and run library (RL) 1517, contain copies of the software which D 311 receives from S 309. HL 1513 holds data files 831 for packages which are not currently available for execution on the CPU of RS 505, and is structured in the same fashion as IL 707 in SC 703. Each data file 831 in HL 1513 is identified by means of a unique identifier. RL 1513 holds data files 831 for packages which are currently available for execution on CPU 605. Files in RL 1517 are identified solely by means of their alphanumeric names, since computer system 601 uses such names to locate and execute programs. In a preferred embodiment, each separate volume in the computer system 601 embodying CRS 507 or RS 505 must have its own HL 1513, and there may be several RLS 1517 for a given HL 1513.

When the files making up the modules of a software package are retrieved from S 309, they are first placed in HL 1513. They may then be installed by placing them in RL 1517 instead of HL 1513. As previously explained, in a preferred embodiment, a file is placed in a different library by changing the file's pathname to include the new library's name. In a preferred embodiment, the unique identifier used for the file's name in HL 1513 is further replaced by the file's alphanumeric name when the file is placed in RL 1517. The operation of changing the file's pathname when it is placed in RL 1517 from HL 1513 or vice-versa is termed hereinafter renaming.

Installation may be either automatic or manual, as specified by DDF 835. When DDF 835 specifies automatic installation of the software, INST TIME 1124 of DDHDR 1003 indicates the time of installation, and when that time is reached, the software is automatically placed in RL 1517 instead of HL 1513. When DDF 835 does not specify automatic installation, the retrieved software is held in HL 1513 until an operator employs DMP 1501 to install the software in RL 1517. Removal is the opposite of installation and is performed by placing the module files for a package in HL 1513 instead of RL 1517. The use of HL 1513 and RL 1517 in a preferred embodiment of RS 505 thus makes it possible to separate the operations of retrieval and installation. Since the operations are separable, users of a preferred embodiment of DDA 301 may specify that the software be automatically installed when it is retrieved, that it be automatically installed at a later time, or that it be manually installed by an operator of RS 505. Further, because HL 1513 is structured in the same fashion as IL 707, HL 1513 may function as an IL 707 for other RSs 505.

The third library live directory library (LDL) 1507, organizes the data files 831 in HL 1513 and RL 1517 into software packages. LDL 1507 is structured in the same fashion as IDL 803: it contains three files, PF 805, containing a PFR 807 for each software package with files 831 in HL 1513 or RL 1517, GF 809, containing a GFR 811 for each group with files 831 in HL 1513 or RL 1517, and MF 813, containing a MFR 815 for each file 831 in HL 1513 or RL 1517.

Logically, LDL 1507 appears as two directories, a production directory (PROD) 1509 for production software and a test directory (TEST) 1511 for test software. LDL 1507 is divided into the two directories in order to permit persons distributing software to HL 1513 and persons using the software in HL 1513 to categorize the software in terms of its relative reliability. If a user deems a particular package to be more reliable, he may specify that LDL 1507 keep it as production software; if he deems it less reliable, he may specify that LDL 1507 keep it as test software. As will be seen in more detail below, a swap operation is provided to recategorize test software as production software. Initially, all software retrieved to HL 1513 is in the test category.

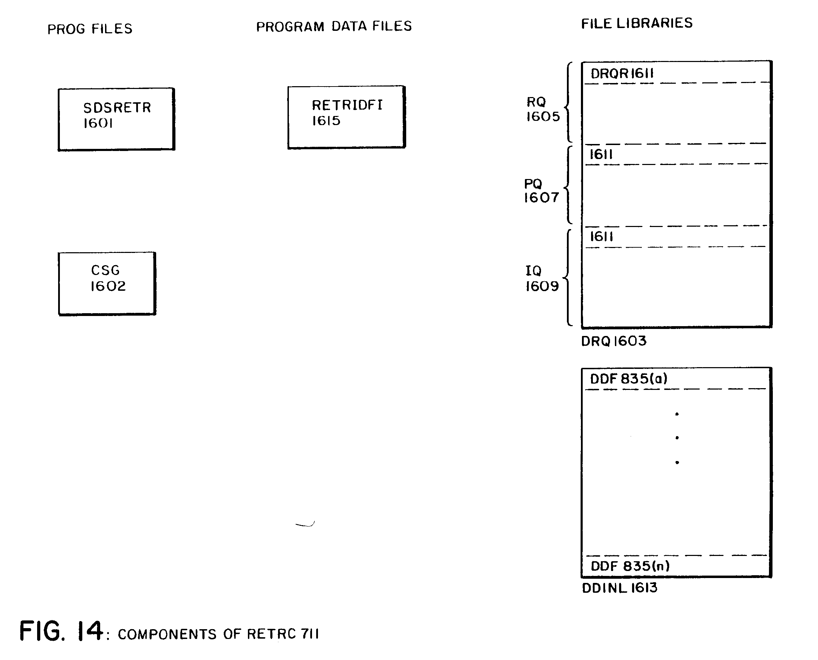

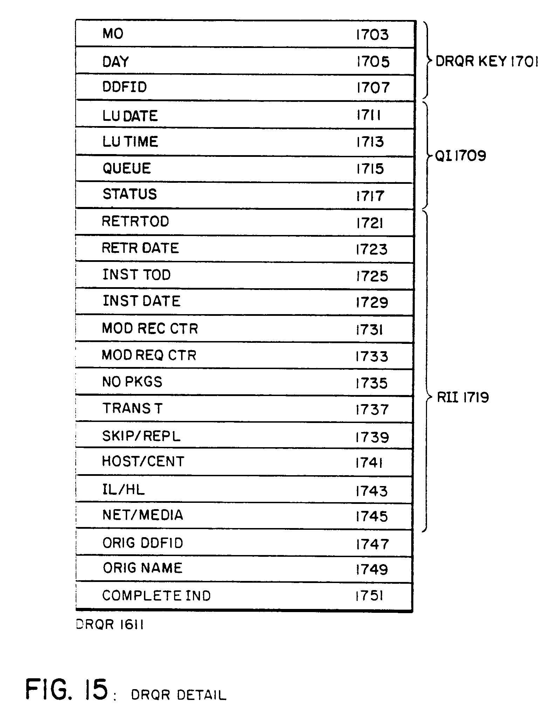

### RETRC 711: Figs. 14 and 15

Retrieve components (RETRC) 711 in a preferred embodiment are also data and program files stored on disks of a computer system 601 upon which RS 505 or CRS 507 is implemented. The program files make up the program SDSRETR 1601, which responds to a DDF 835 by making records in LDL 1507 for the packages represented by DDF 835, retrieving the files for the package's modules from the IL 707 specified in DDF 835 to a HL 1513 or an IL 707, and if specified in DDF 835, installs the modules for the package in RL 1517. The data files making up RETRC 711 include data retrieval queue (DRQ) 1603, which contains records indicating files to be retrieved from S 309 and the status of the retrieval and installation operations, data descriptor in library (DDINL) 1613, which is analogous to DDOUTL 833 and contains DDFs 835 which have been received in RS 505, and retrieve ID file (RETRIDFI) 1615, which is analogous to DISTIDFI 821 and similarly provides unique identifiers for the DDFs 835 received in DDINL 1613.

DRQ 1603 actually contains three queues: retrieve queue (RQ) 1605, package queue (PQ) 1607, and install queue (IQ) 1609. The DRQR 1611 records in RQ 1605 represent DDFs 835 for which the operation of retrieving the data specified in DDF 835 from S 309 to HL 1513 is taking place; those in PQ 1607 represent DDFs 835 for which the operation of making PFRs 807, GFRs 811, and MFRs 815 in LDL 1507 is taking place; those in IQ 1609 represent DDFs 835 for which the operation of installation in RL 1517 is taking place. As the data represented by a given DDF 835 moves through the steps of being retrieved, packaged, and installed, DRQR 1611 representing the DDF 835 moves from one queue to another. In a preferred embodiment, the movement is logical; the physical position of a given record in DRQ 1603 remains unchanged. In other embodiments, a record may in fact change its position as it moves from queue to queue.

During the course of each operation, status indicators in DRQR 1611 indicate the current status of the operation with regard to the data represented by the DDF 835 to which the DRQR 1611 corresponds. The possible statuses are the following:
retrieve operation:
- TOD: awaiting date/time specified for retrieve
- CHECK: DDF 835 being checked for conflicts
- ERR-nnnn: conflict check failed. nnnn indicates reason
- ACTIVE: module files specified in DDF 835 being retrieved via net 615
- CANCEL: operations on DDF 835 being cancelled
- CANCELED: cancellation complete

package operation:
- ACTIVE: making PFR 807, GFRs 811, and MFRs 815 for the package in LDL 1507
- ERR-nnnn: failure while making the records for the package; nnnn indicates the reason

installation operation:
- TOD: awaiting date/time specified for installation
- ACTIVE: files specified in DDF 835 being installed in RL 1517
- ERR-nnnn: failure while installing the package in RL 1517; nnnn indicates the reason
- HOLD: awaiting installation by user of RS 505
- COMPLETE: installation complete
- CANCEL: operations on DDF 835 being cancelled
- CANCELLED: cancellation complete

Within each queue in DRQ 1603, the DRQRs 1611 are ordered by the current status of the operation for the package represented by DDF 835.

In a preferred embodiment, each DRQR 1611 has the fields shown in figure 15. There are three major subdivisions of fields: DRQR Key 1701, which is the key by which the record may be accessed in DRQ 1603, queue information (QI) fields 1709, which contains the information required to order DRQR 1611 in DRQ 1603, and retrieval and installation (RII) fields 1719, which contain information concerning the retrieval and installation of files specified in a DDF 835.

Beginning with KEY 1701, MO field 1703 and DAY field 1705 respectively contain the month and the day upon which DRQR 1611 was created. DDFID 1707 contains the unique identifier from RETRIDFI 1615 which was assigned to incoming DDF 835 when DRQR 1611 for incoming DDF 835 was created. QI 1709 contains LU DATE field 1711 and LU TIME field 1713, which specify the last time that the contents of DRQR 1611 were altered. QUEUE 1715 indicates which of the three queues in DRQ 1603 DRQR 1611 presently belongs to and STATUS 1717 indicates which status the package represented by DRQR 1611 presently has. The values of both QUEUE 1715 and STATUS 1717 change as the package represented by DRQR 1611 is processed.

RII 1719 contains the following fields: RETR TOD 1721 and RETR DATE 1723 contain the time and date at which the package represented by DRQR 1611 is to be retrieved; INST TOD 1725 and INST DATE 1729 contain the time and date at which the package is to be installed. The values in these fields come from the values in fields 1121-1127 of DDHDR 1003 in DDF 835 representing the package. Modules received counter (MOD REC CTR) 1731 and modules requested counter (MOD REQ CTR) 1733 indicate respectively how many modules of the packages have been received over net 615 and how many have been requested. NO PKGS 1735 indicates the number of packages specified in DDF 835 represented by DRQR 1611 and TRANS T 1737 specifies the estimated time required to transfer the module files for the package via net 615. The values in these fields come from fields 1119 and 1129 respectively of DDHDR 1003. The values in SKIP/REPL field 1739 indicate actions to be taken by SDSRETR 1601 when certain situations arise in the course of retrieval and installation. This field is set from field 1131 of DDHDR 1003. HOST/CENT field 1741 indicates whether the IL 707 containing the files for the modules represented by DDF 835 is associated with a host 509 or is associated with a CS 503 or a CRS 507. IL/HL field 1743 indicates whether the retrieved software is to be loaded to an IL 707 or an HL 1513. These fields are set from L/R 1135 in DDHDR 1003. DDF NET/MEDIA field 1745 indicates whether the files 623 are to be retrieved via net 615 or from media.

There are three remaining fields: ORIG DDFID 1747 contains the unique identifier assigned to DDF 835 represented by DRQR 1611 when DDF 835 was created in CRS 507; the value is obtained from DISTIDIN 1115 of DDHDR 1003. ORIG NAME 1749 identifies CRS 507; COMPLETE-IND 1751, finally, indicates whether processing of DDF 835 represented by DRQR 1611 is complete. The complete state, CMPT, may be reached because an error during retrieval or installation has made further processing impossible or because all of the processing specified in DDF 835 has in fact been completed.

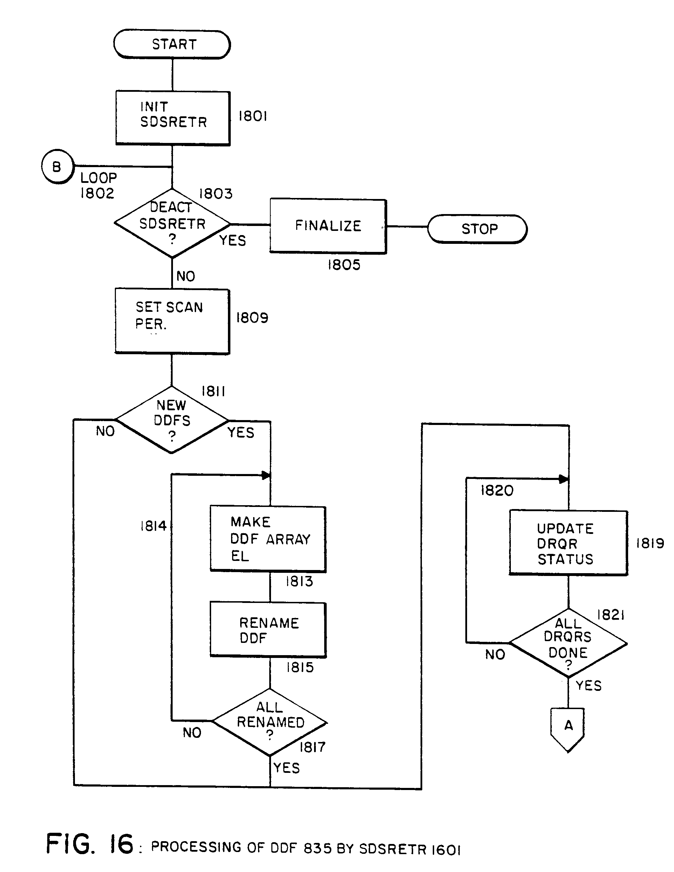

### Overview of Operation of RETRC 711: Figs. 16 - 16A

In a preferred embodiment, the programs of SDSRETR 1601 operate on DRQ 1603, DDINL 1613, LDL 1507, HL 1513, and RL 1517. The programs are executed by a background task on system 601, i.e., by a task whose execution does not require intervention of users of system 601 and which can thus execute at times when the CPU is not engaged in executing tasks requiring response to users of system 601. In other embodiments, the programs of SUSRETR 1601 may be executed by a separate process having the same property or may be executed interactively. In the following, the operation of RETRC 711 is explained using flowcharts of SDSRETR 1601, beginning with a high-level flowchart of the program and continuing with detailed flowcharts of certain blocks of the high-level flowchart.

Figures 16 and 16A together make up a high-level flow chart of the processing executed by the programs of SDSRETR 1601. The programs are structured as a loop. After initialization, in which a "mailbox" is created whereby the task executing SDSRETR 1601 may receive messages from net 615, the loop continues to execute as a background task until a user of CRS 507 or RS 505 deactivates the program (box 1803). Upon deactivation, the mailbox is deleted and a message sent indicating that the background task executing the program has been deactivated (box 1805). Within the loop, the program first sets a default scan period. (box 1809). The scan time is a value which determines the interval between executions of the loop. In other embodiments, there may be no scan time and the loop may be executed in response to an interrupt or inter-process message indicating that an event of interest to the background task has occurred.

Next, the program determines from the number of files in DDINL 1613 whether any DDFs 835 have been added to the library since the last execution of the loop (decision block 1811). If any have been, the program executes a loop which for each new DDF 835 creates an element in an array called DDF array which is used to control DRQ 1603 and then "renames" each new DDF 835. Renaming involves making a new unique identifier for the DDF 835, placing the value in DISTIDIN field 1115 of DDHDR 1003 of the DDF 835, placing the value in DDFID field 1707 of DRQR 1611 for the DDF 835, and placing the value of DISTIDOUT field 1117 of the DDF 835 into the ORIG DDFID field 1747 of DRQR 1611. Renaming gives DDF 835 a unique name in the CRS 507 where it originated and in each of the RSs 505 which retrieved it and makes it possible to track the DDF 835 in both the system in which it originated and those to which it was sent.

The next step (block 1819) is to process DRQ 1603 to update the current status of DRQRs 1611 representing DDFs 835 for which the files specified in the DDF 835 are being retrieved. Loop 1820 which performs the processing continues until all DRQRs 1611 in DRQ 1603 have been examined. If all of the modules specified in any of the DDFs 835 represented by DRQRs 1611 have been retrieved, the program sets an all modules received switch. Continuing with Figure 16A, the program next checks that switch (decision block 1823). If it is set, the program branches to block 1843; otherwise, the program proceeds to loop 1830, which reads each element of the DDF array (block 1825). For each element of the DDF array, the program determines whether a DRQR 1611 for the DDF array element exists (decision block 1827). If the DRQR 1611 does not exist, it makes the DRQR 1611, filling in the fields of DRQR 1611 from DDHDR 1003 of the DDF 835 corresponding to the array element (block 1829). Thereupon, the fields of the DDF array element are filled in from DDHDR 1003 of DDF 835 and from DRQR 1611 corresponding to DDF 835 (block 1831). The array element has the following fields:
DATE, containing a date
TIME, containing a time of day
RETRIEVE/INSTALL STATUS, indicating whether the modules represented by DDF 835 are being retrieved or installed
DDF DATE, containing the value of DISTD 1113 in DDHDR 1003
DDF ID, containing the value of DISTIDIN field 1115.

RETRIEVE/INSTALL STATUS is set from DRQR 1611's QUEUE field 1715; depending on the value of QUEUE field 1715, DATE and TIME are set from either RETR TOD 1721 and RETR DATE 1723 or INST TOD 1725 and INST DATE 1729 in DRQR 1611. The above steps are performed for each element in the DDF array. When the last element has been processed, the loop terminates (decision block 1835).

Processing continues with decision block 1837, which checks whether the DDF array contains any elements. If it does not, there is no further processing to do and the program pauses in block 1839 until the scan period has elapsed. At that point, execution resumes at block 1803. If the DDF array contains elements, the array is sorted (block 1841). The sort is based primarily on the value of DATE and TIME and secondarily on the values of RETRIEVE/INSTALL STATUS. Thus, at the end of the sort, the elements in the DDF array are ordered so that those with earlier dates and times precede those with later dates and times and if there is a tie with regard to time, those with retrieve status precede those with install status.

After the sort, a variable called CFILE, representing the next DDF 835 to be processed, is set from DDFID in the first element of the sorted array (block 1845). Then a queue status variable, DRQRS, is set from RETRIEVE/INSTALL STATUS in the first element of the sorted DDF array. Depending on the value of RETRIEVE/INSTALL STATUS, DRQRS is set to specify the IT status, indicating installation at the time specified in DATE and TIME, or RT, indicating retrieval at the time specified in DATE and TIME (blocks 1847, 1849, 1851).

The final step in loop 1802 is processing a DRQR 1611. The DRQR 1611 processed will either be one for which all modules have been received or the one which is represented by the first element of the DDF array. In the latter case, if that element is one for which the specified TIME and DATE have already passed, the element is processed; otherwise, the program pauses until either the scan period expires or the specified TIME and DATE is reached, whichever happens first. Execution after the specified TIME and DATE are reached continues at block 1803.

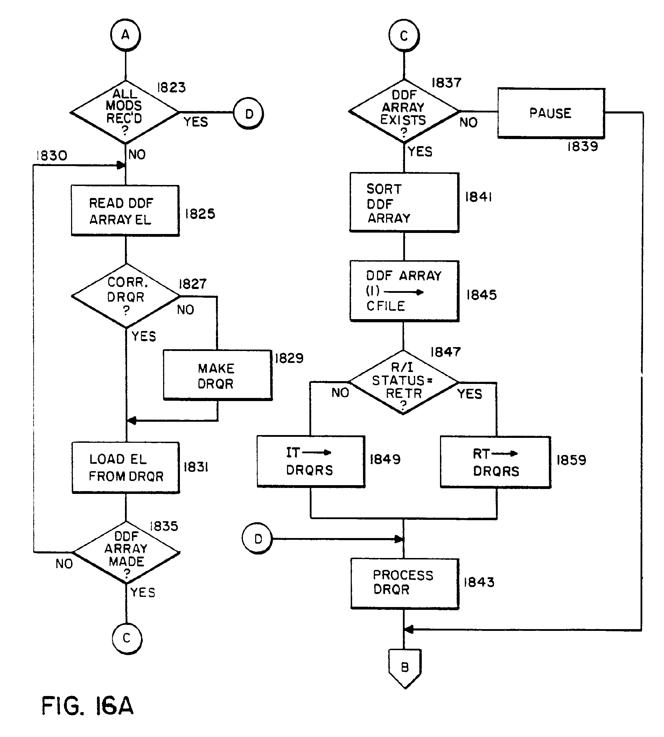

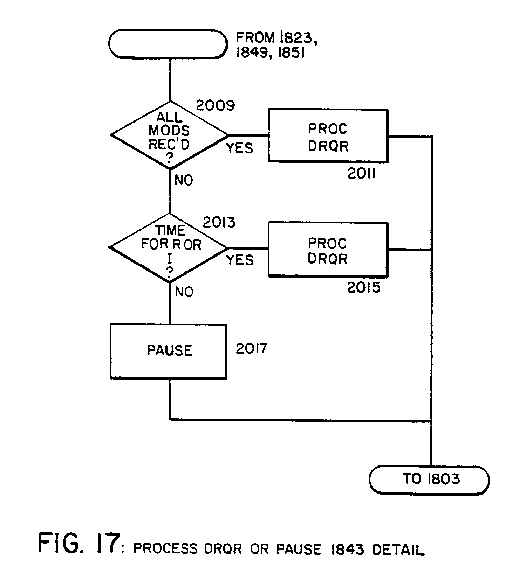

### Detail of Process DRQR or Pause Block 1843: Fig. 17

The flowchart of figure 17 provides a detailed description of Process DRQR or Pause Block 1843. Processing in block 1843 is determined by whether all modules for the DDR 835 represented by DRQR 1611 have already been received in CRS 507 or RS 505. Whether that was the case was determined in decision block 1911. If all modules have already been received (block 2009), the DRQR 1611 is immediately processed (block 2011). Otherwise, the values of DATE and TIME in the first DDF array element are checked to determine whether it is time to perform either a retrieve or an install operation (block 2013). If it is, the top DRQR 1611 is processed (block 2015); if it is not, there is a pause until either the scan period expires or the time specified in the first DDF array element is reached (block 2017).

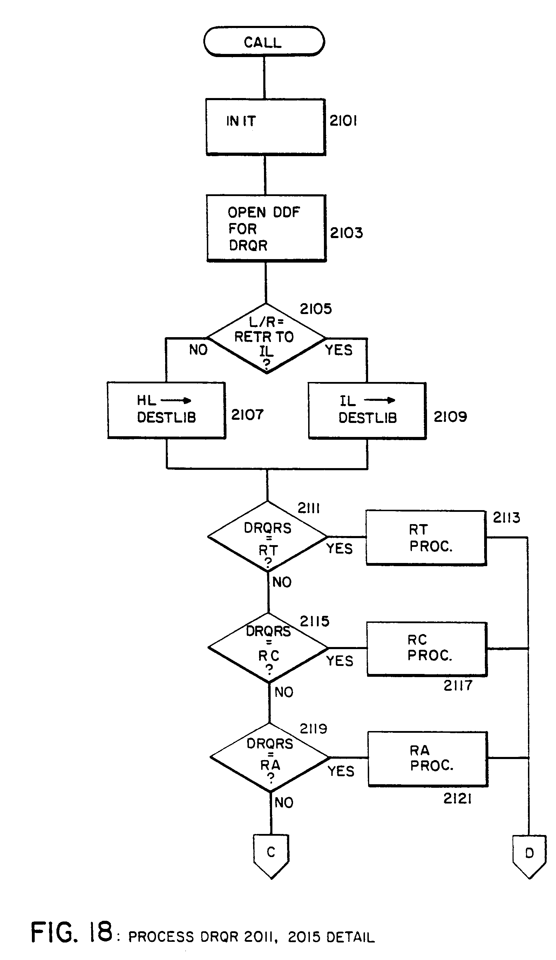

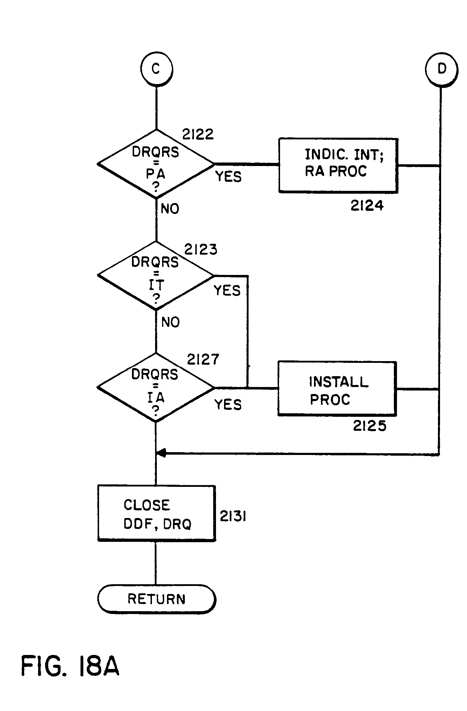

### Process DRQR 2015 Detail: Figs. 18 and 18A

In a present embodiment, the processing in Process DRQR 2015 is performed by calling a procedure. The arguments used in the call are the variable DRQRS, indicating the status of the DRQR 1611 being processed and CFILE, which contains DDFID, the identifier for the DDF 835 represented by the DRQR 1611 being processed. Figures 18 and 18A are a high-level flowchart of the processing performed by the procedure.

Blocks 2101 through 2109 initialize the procedure. In block 2101, variables are set to default values. Among the variables of interest for the present invention are variables specifying HL 1513, and RL 1517. In block 2103, DDF 835 corresponding to the DRQR 1611 being processed is opened and variables used locally in the procedure are set from the values of fields NO PKG 1119, RETR DATE 1121, RETR TOD 1123, INST DATE 1125, INST TOD 1127, CONFR 1131, SSF 1133, L/R 1135, SID 1137, OID 1139, and RID 1141. Then, if the variable set from L/R 1135 indicates that the modules are to be retrieved to an IL 707, variables in the procedure are set so that IL 707 becomes the destination of the retrieved modules; otherwise, HL 1513 is the destination (blocks 2107, 2109).

The actual processing of the DRQR 1611 occurs in blocks 2111 through 2127. The processing is controlled by the present value of the variable DRQRS. The values of DRQRS may indicate the following statuses:
- RT:: retrieve when the time specified in DDF 835 for retrieval arrives.
- RC:: check whether the conditions for retrieval are met.
- RA:: retrieval currently underway.
- PA:: loading of retrieved package into library designated as a destination currently underway.
- IT:: awaiting time specified in DDF 835 for installation of package in RL 1517.
- IA:: installation currently underway.

DRQRS changes from one of these states to another and the values of QUEUE field 1715 and STATUS field 1717 in DRQR 1611 are changed to specify the state indicated by the new value of DRQRS each time the procedure is executed. Generally speaking, a given DRQR 1611 goes through the states in the order RT, RA, PA, IT, IA. An additional state, RC, is used to indicate an abnormal termination during the transition from RT to RA. Once the RC state is reached, the next state is RA. An error in any of these states terminates processing of the DRQR 1611. When an error occurs, an error flag and an error code indicating the kind of error are set. Completion of processing of DRQR 1611 is indicated by the value of another variable, CMPTS. That variable indicates CMPT, the complete state, when processing in the IA state has been finished and when an error occurs.

Returning to figure 18, in decision block 2111, the program tests for the RT state; if DRQRS has that value in an invocation of the procedure, the time specified in RETR DATE 1121 and RETR TOD 1123 of the DRQR 1611 has been reached. The processing necessary to begin the retrieval is carried out in RT processing block 2113. If the processing succeeds, DRQRS is set to RA; if it is interrupted, DRQRS is set to RC; if there is an error, the error flag and error code are set and and CMPTS is set to CMPT. The program then executes block 2131 (figure 18A), which closes the files containing DRQ 1603 and DDF 835, and returns.

If DRQRS does not specify the status RT, the program tests for the status RC (block 2115); if DRQRS does not have that status, the program tests for status RA (block 2119). Continuing in figure 21A, if DRQRS does not have the RA status, the program tests for status PA (block 2122). DRQRS can have the PA status only if RA processing was interrupted, and consequently, the program sets a flag to indicate that fact and again performs the RA processing (block 2124). If DRQRS does not have the PA status, the program tests for the IT status (block 2123), and if DRQRS does not have the IT status, the program tests for the IA status (block 2127). When a status is found, processing for the status is performed (blocks 2117, 2121, 2124, 2125), the value of DRQRS and the fields QUEUE 1715 and STATUS 1717 are set to the next status, or an error is indicated and CMPTS is set to CMPT, and block 2131 is executed as previously described.

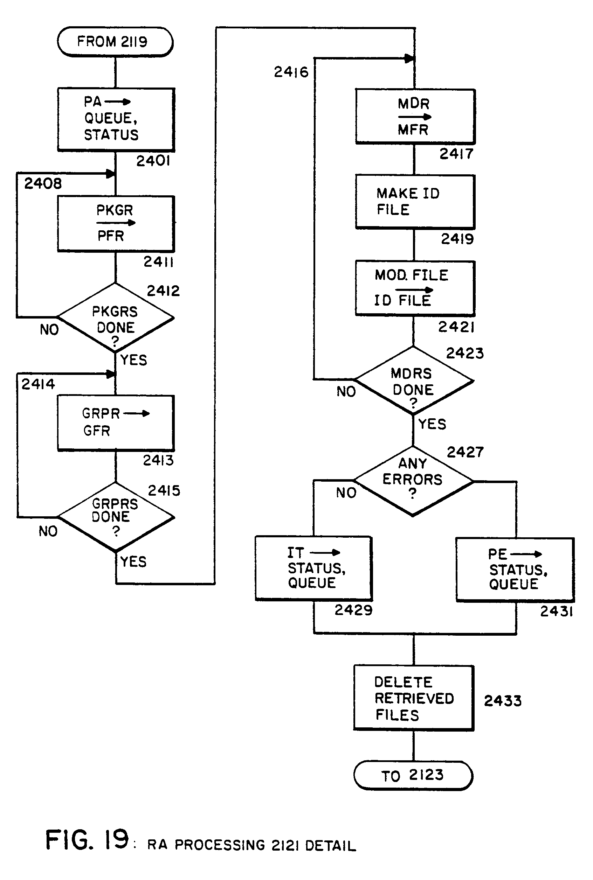

### Detail of RA Processing 2121: Fig. 19

RA processing 2121 for a given DRQR 1611 takes place only after all module files in the packages represented by a given DDF 835 have arrived in the system 601 containing the HL 1513 or IL 707 in which the modules will be stored. As shown in the flowchart of figure 19, RA processing 2121 adds records for the packages, groups, and modules represented by DDF 835 to LDL 1507 if the destination is HL 1513 or to IDL 803 if the destination is IL 707 and then places the retrieved module files represented by DDF 835 into HL 1513 or IL 707. Placing a retrieved module file into HL 1513 or IL 707 includes making a file identified by a unique identifier in HL 1513 or IL 707, making an entry for the file in ID file 829, copying the retrieved file into the file identified by the unique identifier, giving it the same kind of protection as the retrieved file had in IL 707 from which it was retrieved, and deleting the retrieved file.

The first step executed by the program is to set QUEUE 1715 and STATUS 1717 in DRQR 1611 to indicate PA (block 2401). Then, loop 2408 is executed for each PKGR 1005 in DDF 835. On each iteration, the contents of one PKGR 1005 are copied to a PFR 807 for the package represented by PKGR 1005 in IDL 803 or LDL 1507 (blocks 2411, 2412). The GRPRs 1007 and MDRs 1009 are copied in the same fashion. In loop 2414, the contents of each GRPR 1007 belonging to the package represented by the PKGR 1005 is copied to a GFR 811 in the IDL 803 or LDL 1507 in question (blocks 2413, 2415). In loop 2416, the contents of each MDR 1009 belonging to the package is copied to a MFR 815 in the IDL 803 or LDL 1507 (block 2417). Next, an ID for the module is created, an entry relating the module name to the ID is made in ID file 829 for the IL 707 or HL 1513, and a file is created which has the ID as a name (block 2419). Finally, the module file, which was loaded into IL 707 or HL 1513 from NET 615, media, or IL 707, is copied to the file having the ID created for the module (block 2421) and the protection information for that file is set from PROTD 943 in MFR 815 corresponding to the file. The loop terminates when all MDRs 1009 belonging to the package currently being processed in loop 2408 have been processed (block 2423).

Because each PKGR 1005 was copied from a PFR 807 in IDL 803 and the PFR 807 in LDL 1507 from PKGR 1005 and the same is the case for each GFR 811 and MFR 815 in LDL 1507, the records for a package in LDL 1507 differ from the records for the same package in IDL 803 only in the following respects:
file info fields 935 in MFR 815 specify a file in RL 1517 or HL 1513 instead of a file in IL 707.
production/test field, 925 may now specify either production or test, depending on the status of the package in LDL 1507.
installed status field 945 may now specify either installed or removed, depending on the status of the package in LDL 1507.

If an error occurred in execution of loop 2408, an error flag was set. At decision block 2427, if the error flag is set, STATUS 1717 and QUEUE 1715 are set to indicate that an error occurred during the processing of the package (block 2431); otherwise, they are set to the IT status, indicating that the software loaded into HL 1513 can be installed in RL 1517 at the time specified in INST DATE 1125 and INST TOD 1127 fields in DDHDR 1003 of DDF 835 (block 2429). Finally, the transferred module files from which the files 623 identified by the IDs were copied are deleted, leaving only the files 623 identified by the IDs in IL 707 or HL 1513 (block 2433).

## Claims

1. Data distribution apparatus (301) used in a digital computer system (501) that includes one or more component systems (502), the digital computer system (501) including a source (309) of data to be distributed, and a destination (311) for the data to be distributed;
characterized in that it includes
system data distribution means (303, 503) which operates in a component system (502) of the digital computer system (501) for creating a system data descriptor (305, 835) having information (1135) expressive of a location of the data to be distributed and also information (1120) expressive of a first time value for indicating a time when the data is to be distributed;
and
system retrieval means (307, 505) which operates in a component system (502) of the digital computer system (501) and which is coupled to, and has access to, the source (309) to store data in the destination (311), the system retrieval means (307) including means (709) for receiving the system data descriptor (305, 835) from the system data distribution means (303) and further including means (711) for automatically responding thereto by transferring the data to be distributed by the data transfer means (511) from the source (309) to the destination (311) at a time corresponding to the first time value expressed by the information (1120) of the system data descriptor (305, 835).

2. The apparatus of claim 1 wherein
the apparatus includes a plurality of sources (309);
characterized in that:
the system data descriptor (305, 835) further specifies a specified one of the plurality of sources (309); and the system retrieval means (307, 505) is coupled to and transfers the data to be distributed from the specified source (309) to the destination (311).

3. The apparatus of claim 1 characterized in that:
the system data descriptor (305, 835) further includes a destination operation descriptor (313) describing operations to be performed by the system retrieval means (307, 505) on the data to be distributed;
and
the system retrieval means (307, 505) further includes means for responding to the system data descriptor (305, 835) by performing operations on the data as specified in the destination operation descriptor (315).

4. The apparatus of claim 1 characterized in that:
the destination (311, 709) includes a first library (1531) for receiving the data to be distributed from the source (309) and for holding the data to be distributed in the destination until the data is installed for use in the destination, and a second library (1517) for holding the data to be distributed when installed;
and
the system retrieval means (307, 505) is coupled to the first library (1513) and includes means (711) for transferring the data to be distributed from the source (309) to the first library (1513).

5. The apparatus of claim 4 characterized in that:
the system data descriptor (305, 835) further specifies a second time value (1124) for indicating when the data to be distributed is to be transferred from the first library (1513) to the second library, and wherein the system retrieval means (307, 505) transfers the data from the first library (1513) to the second library (1517) no earlier than a time specified by the second time value (1124).

6. The apparatus of claim 4 characterized in that:
the first time value (1120) is included within the system data descriptor (305, 835) for specifying a time when the data to be distributed is to be transferred from the source (309, 711) to the first library (1513), and wherein the transferring means of the system retrieval means (307, 505) is responsive to the first time value (1120) of the system data descriptor (305, 835) for transferring the data no earlier than the time specified by the first time value.

7. The apparatus of claim 1 characterized in that:
the digital computer system (501) includes a central computer system (503) and a remote computer system (505) coupled together by data transfer means (511);
the system data distribution means (303), operates in a first processor in the central computer system (503) and the source (309) is accessible from the first processor;
the system data distribution means (303) is coupled to and employs the data transfer means (511) to transfer the system data descriptor from the central computer system (503) to the remote computer system;
the system retrieval means (307) operates in a second processor in the remote computer system (505) and the destination (311) is accessible from the second processor; and
the system retrieval means (307) receives the system data descriptor from the data transfer means (511).

8. The apparatus of claim 1 characterized in that:
the data to be distributed is stored in a first data module (831) in the source (703);
the system data descriptor includes protection descriptor (305, 835) information includes protection description expressive of the protection information for the first module (831); and
the system retrieval means (307, 505) further includes means (2121) for responding to the protection descriptor information (943) of the system data descriptor (305,835) by copying the data to be distributed into a second data module (623) in the destination (311), and wherein the system retrieval means (307) further includes means for generating protection descriptor information for the second module (623) which is identical to the protection descriptor information for the first module and which is accessible in the destination (311).

9. The apparatus of claim 1 characterized in that:
the digital computer system (501) includes media reading means (407) and media writing means (405);
the source (309) comprises media means (401) whereupon the system data distribution means (303, 503) has employed the media writing means (405) to write the system data descriptor (305, 835) and the data to be distributed; and
the system retrieval means (307, 505) employs the media reading means (407) to read the system data descriptor (305, 835) from the media means (405) and responds thereto by employing the media reading means (405) to read the data to be distributed from the media means (405) for transferring the data to be distributed from the media means (405) to the destination (311).

10. The apparatus of claim 1 characterized in that:
the data to be distributed is software executable in a processor in the digital computer system (501), and the destination (311) includes storage means (709) for software to be executed in the processor, and wherein the system retrieval means (307, 505) further includes means for storing the executable software in the storage means (709).

## Patentansprüche

1. Datenverteilungsvorrichtung (301) zur Verwendung in einem Digitalrechner-System (501), das ein oder mehr als ein Teilsystem (502) aufweist, wobei das Digitalrechner-System (501) eine Quelle (309) für zu verteilende Daten und einen Empfänger (311) für die zu verteilenden Daten umfaßt,
dadurch **gekennzeichnet**, daß sie umfaßt:
- eine System-Datenverteilungs-Einrichtung (303, 503), die in einem Teilsystem (502) des Digitalrechner-Systems (501) arbeitet, um einen System-Datendeskriptor (305, 835) zu erzeugen, der Informationen (1135) über eine Speicheradresse der zu verteilenden Daten und ferner Informationen (1120) über einen ersten Zeitwert aufweist, der einen Zeitpunkt angibt, in dem die Daten zu verteilen sind, und
- eine System-Wiedergewinnungs-Einrichtung (307, 505), die in einem Teilsystem (502) des Digitalrechner-Systems (501) arbeitet und zum Speichern von Daten im Empfänger (311) mit der Quelle (309) verbunden ist und Zugriff zu ihr hat, wobei die System-Wiedergewinnungs-Einrichtung (307) eine Einrichtung (709) zum Empfangen des System-Datendeskriptors (305, 835) von der System-Datenverteilungs-Einrichtung (303) und ferner eine Einrichtung (711) aufweist, die hierauf automatisch anzusprechen vermag durch Übertragen der zu verteilenden Daten durch die Datenübertragungs-Einrichtung (511) von der Quelle (309) zum Empfänger (311) in einem Zeitpunkt, der dem ersten durch die Information (1120) des System-Datendeskriptors (305, 835) angegebenen Zeitwert entspricht.

2. Vorrichtung nach Anspruch 1,
bei der die Vorrichtung eine Vielzahl Quellen (309) aufweist, dadurch **gekennzeichnet**, daß
- der System-Datendeskriptor (305, 835) ferner aus der Vielzahl von Quellen (309) eine spezifizierte Quelle spezifiziert, und
- die System-Wiedergewinnungs-Einrichtung (307, 505) mit der spezifizierten Quelle (309) verbunden ist und die zu verteilenden Daten von ihr zum Empfänger (311) überträgt.

3. Vorrichtung nach Anspruch 1,
dadurch **gekennzeichnet**, daß
- der System-Datendeskriptor (305, 835) ferner einen Empfänger-Operationsdeskriptor (313) aufweist, der von der System-Wiedergewinnungs-Einrichtung (307, 505) auszuführende Operationen an den zu verteilenden Daten beschreibt, und
- die System-Wiedergewinnungs-Einrichtung (307, 505) ferner eine Einrichtung umfaßt, die auf den System-Datendeskriptor (305, 835) durch Ausführen von im Empfänger-Operationsdeskriptor (315) spezifizierten Operationen an den Daten anspricht.

4. Vorrichtung nach Anspruch 1,
dadurch **gekennzeichnet**, daß
der Empfänger (311, 709) eine erste Bibliothek (1513) aufweist, welche die zu verteilenden Daten von der Quelle (309) zu empfangen und die zu verteilenden Daten im Empfänger zu halten vermag, bis die Daten für die Verwendung im Empfänger installiert sind, und eine zweite Bibliothek (1517) zum Halten der zu verteilenden Daten nach dem Installieren, und
- die System-Wiedergewinnungs-Einrichtung (307, 505) mit der ersten Bibliothek (1513) verbunden ist und eine Einrichtung (711) zum Übertragen der zu verteilenden Daten von der Quelle (309) zur ersten Bibliothek (1513) umfaßt.

5. Vorrichtung nach Anspruch 4,
dadurch **gekennzeichnet**, daß
- der System-Datendeskriptor (305, 835) ferner einen zweiten Zeitwert (1124) zum Anzeigen des Zeitpunktes, in dem die zu verteilenden Daten von der ersten Bibliothek (1513) zur zweiten Bibliothek zu übertragen sind, spezifiziert, und
- bei der die System-Wiedergewinnungs-Einrichtung (307, 505) die Daten von der ersten Bibliothek (1513) zur zweiten Bibliothek (1517) nicht früher als zu dem Zeitpunkt überträgt, der durch den zweiten Zeitwert (1124) vorgeschrieben ist.

6. Vorrichtung nach Anspruch 4,
dadurch **gekennzeichnet**, daß
- der erste Zeitwert (1120) im System-Datendeskriptor (305, 835) enthalten ist, um einen Zeitpunkt zu spezifizieren, in dem die zu verteilenden Daten von der Quelle (309, 711) zur ersten Bibliothek (1513) zu übertragen sind, und
- bei der die Übertragungseinrichtung der System-Wiedergewinnungs-Einrichtung (307, 505) auf den ersten Zeitwert (1120) des System-Datendeskriptors (305, 825) anspricht, um die Daten nicht früher als zu dem Zeitpunkt zu übertragen, der durch den ersten Zeitwert vorgeschrieben ist.

7. Vorrichtung nach Anspruch 1,
dadurch **gekennzeichnet**, daß
- das Digitalrechner-System (501) ein zentrales Rechnersystem (503) und ein abgesetztes Rechnersystem (505) aufweist, welche durch eine Datenübertragungs-Einrichtung (511) miteinander verbunden sind,
- die System-Datenverteilungs-Einrichtung (303) in einem ersten Prozessor im zentralen Rechnersystem (503) arbeitet und auf die Quelle (309) über den ersten Prozessor zugegriffen werden kann,
- die System-Datenverteilungs-Einrichtung (303) mit der Datenübertragungs-Einrichtung (511) verbunden ist und sie zum Übertragen des System-Datendeskriptors vom zentralen Rechnersystem (503) zum abgesetzten Rechnersystem benutzt,
- die System-Wiedergewinnungs-Einrichtung (307) in einem zweiten Prozessor im abgesetzten Rechnersystem (505) arbeitet und auf den Empfänger (311) über den zweiten Prozessor zugegriffen werden kann, und
- die System-Wiedergewinnungs-Einrichtung (307) den System-Datendeskriptor von der Datenübertragungs-Einrichtung (511) empfängt.

8. Vorrichtung nach Anspruch 1,
dadurch **gekennzeichnet**, daß
- die zu verteilenden Daten in einem ersten Datenmodul (831) in der Quelle (703) gespeichert sind,
- der System-Datendeskriptor (305, 835) Schutzdeskriptor-Informationen (943) umfaßt, welche Schutzinformationen für das erste Modul (831) angeben, und
- die System-Wiedergewinnungs-Einrichtung (307) ferner eine Einrichtung (2121) zum Ansprechen auf die Schutzdeskriptor-Informationen (943) des System-Datendeskriptors (305, 835) durch Kopieren der zu verteilenden Daten in ein zweites Datenmodul (623) im Empfänger (311) aufweist, und
- bei der die System-Wiedergewinnungs-Einrichtung (307) ferner eine Einrichtung (2421) zum Erzeugen von Schutzdeskriptor-Informationen für das zweite Modul (623) umfaßt, die mit den Schutzdeskriptor-Informationen für das erste Modul (831) identisch sind und auf die im Empfänger (311) zugegriffen werden kann.

9. Vorrichtung nach Anspruch 1,
dadurch **gekennzeichnet**, daß
das Digitalrechner-System (501) eine Datenträger-Leseeinrichtung (407) und eine Datenträger-Schreibeinrichtung (405) aufweist,
- die Quelle (309) eine Datenträger-Einrichtung (401) umfaßt, auf der die System-Datenverteilungs-Einrichtung (303, 503) die Datenträger-Schreibeinrichtung (405) zum Schreiben des System-Datendeskriptors (305, 835) und der zu verteilenden Daten benutzt hat, und
- die System-Wiedergewinnungs-Einrichtung (307, 505) die Datenträger-Leseeinrichtung (407) benutzt, um den System-Datendeskriptor (305, 835) aus der Datenträger-Einrichtung (401) auszulesen und darauf durch Benutzen der Datenträger-Leseeinrichtung (407) zum Lesen der zu verteilenden Daten aus der Datenträger-Einrichtung (401) anspricht, um die zu verteilenden Daten von der Datenträger-Einrichtung (401) zum Empfänger (311) zu übertragen.

10. Vorrichtung nach Anspruch 1,
dadurch **gekennzeichnet**, daß
- die zu verteilenden Daten Programme sind, die in einem Prozessor im Digitalrechner-System (501) lauffähig sind, und
- der Empfänger (311) eine Speichereinrichtung (709) für im Prozessor auszuführende Programme aufweist, und
- bei der die System-Wiedergewinnungs-Einrichtung (307, 505) ferner eine Einrichtung zum Speichern der lauffähigen Programme in der Speichereinrichtung (709) aufweist.

## Revendications

1. Appareil de distribution de données, employé dans un système d'ordinateur numérique (501) qui comprend un ou plus d'un système constituant (502), le système d'ordinateur numérique (501) comportant une source (309) de données à distribuer et un récepteur (311) des données à distribuer,
**caractérisé** en ce qu'il comprend
- un moyen de distribution de données système (303, 503) qui travaille dans un système constituant (502) du système d'ordinateur numérique (501) et destiné à créer un descripteur de données système (305, 835) ayant des informations (1135) indiquant un emplacement des données à distribuer, et aussi des informations (1120) indiquant une première valeur de temps destiné à indiquer un moment où les données seront à distribuer, et
- un moyen de récupération système (307, 505) qui travaille dans un système constituant (502) du système d'ordinateur numérique (501) et qui est relié avec et a accès à la source (309), de manière à stocker des données dans le récepteur (311), le moyen de récupération système (307) comprenant un moyen (709) destiné à recevoir le descripteur de données système (305, 835) du moyen de distribution de données système (303), et comprenant en outre un moyen (711) destiné à y répondre automatiquement en transférant les données à distribuer par le moyen de transfert de données (511) à partir de la source (309) au récepteur (311) à un moment correspondant à la première valeur de temps indiquée par les informations (1120) du descripteur de données système (305, 835).

2. Appareil selon la revendication 1,
dans lequel l'appareil comprend une multitude de sources (309),
**caractérisé** en ce que
- le descripteur de données système (305, 835) spécifie en outre une source spécifiée parmi la multitude de sources (309), et
- que le moyen de récupération système (307, 505) est relié avec la source spécifiée (309) et transfère les données à distribuer à partir d'elle au récepteur (311).

3. Appareil selon la revendication 1,
**caractérisé** en ce que
- le descripteur de données système (305, 835) comprend en outre un descripteur des opérations de récepteur (313) qui décrit les opérations à exécuter par le moyen de récupération système (307, 505) sur les données à distribuer, et
- le moyen de récupération système (307, 505) comprend en outre un moyen destiné à répondre au descripteur de données système (305, 835) en exécutant sur les données des opérations telles que spécifiées dans le descripteur des opérations de récepteur (315).

4. Appareil selon la revendication 1,
**caractérisé** en ce que
- le récepteur (311, 709) comporte une première bibliothèque (1513) destinée à recevoir les données à distribuer de la source (309) et à retenir les données à distribuer dans le récepteur jusqu'au moment où les données sont installées en vue de leur utilisation dans le récepteur, et une seconde bibliothèque (1517) destinée à retenir les données à distribuer après leur installation, et
- le moyen de récupération système (307, 505) est relié avec la première bibliothèque (1513) et comprend un moyen (711) destiné à transférer les données à distribuer de la source (309) à la première bibliothèque (1513).

5. Appareil selon la revendication 4,
**caractérisé** en ce que
- le descripteur de données système (305, 835) spécifie en outre une seconde valeur de temps (1124) destinée à indiquer le moment où les données à distribuer seront à transférer de la première bibliothèque (1513) à la seconde bibliothèque, et
- dans lequel le moyen de récupération système (307, 505) transfère les données de la première bibliothèque (1513) à la seconde bibliothèque (1517) à un moment pas antérieur au moment spécifié par la seconde valeur de temps (1124).

6. Appareil selon la revendication 4,
**caractérisé** en ce que
- la première valeur de temps (1120) est incorporée dans le descripteur de données système (305, 835) afin de spécifier un moment où les données à distribuer seront à transférer de la source (309, 711) à la première bibliothèque (1513), et
- dans lequel le moyen de transfert du moyen de récupération système (307, 505) est sensible à la première valeur de temps (1120) du descripteur de données système (305, 835) afin de transférer les données à un moment pas antérieur au moment spécifié par la première valeur de temps.

7. Appareil selon la revendication 1,
**caractérisé** en ce que
- le système d'ordinateur numérique (501) comprend un système d'ordinateur central (503) et un système d'ordinateur à distance (505), couplés l'un avec l'autre par un moyen de transfert de données (511),
- le moyen de distribution de données système (303) travaille dans un premier processeur dans le système d'ordinateur central (503) et la source (309) est accessible à partir du premier processeur,
- le moyen de distribution de données système (303) est relié avec et utilise le moyen de transfert de données (511) de manière à transférer le descripteur de données système du système d'ordinateur central (503) au système d'ordinateur à distance,
- le moyen de récupération système (307) travaille dans un second processeur dans le système d'ordinateur à distance (505), et le récepteur (311) est accessible à partir du second processeur, et
- le moyen de récupération système (307) reçoit le descripteur de données système du moyen de transfert de données (511).

8. Appareil selon la revendication 1,
**caractérisé** en ce que
- les données à distribuer sont mémorisées dans un premier module de données (831) dans la source (703),
- le descripteur de données système (305, 835) comprend des informations d'un descripteur de protection (943), indiquant des informations de protection pour le premier module (831), et
- le moyen de récupération système (307) comprend en outre un moyen (2121) destiné à répondre aux informations d'un descripteur de protection (943) du descripteur de données système (305, 835) en introduisant une copie des données à distribuer dans un second module de données (623) dans le récepteur (311), et
- dans lequel le moyen de récupération système (307) comprend en outre un moyen (2421) destiné à générer des informations d'un descripteur de protection pour le second module (623) qui sont identiques aux informations du descripteur de protection pour le premier module (831) et qui sont accessibles dans le récepteur (311).

9. Appareil selon la revendication 1,
**caractérisé** en ce que
- le système d'ordinateur numérique (501) comprend un moyen de lecture de support (407) et un moyen d'écriture sur support (405),
- la source (309) comprend un moyen de support (401), sur lequel le moyen de distribution de données système (303, 503) a employé le moyen d'écriture sur support (405) de manière à écrire le descripteur de données système (305, 835) et les données à distribuer, et
- le moyen de récupération système (307, 505) utilise le moyen de lecture de support (407) pour lire le descripteur de données système (305, 835) dans le moyen de support (401) et y répond en utilisant le moyen de lecture de support (407) pour lire les données à distribuer dans le moyen de support (401) afin de transférer les données à distribuer du moyen de support (401) au récepteur (311).

10. Appareil selon la revendication 1,
**caractérisé** en ce que
- les données à distribuer sont des logiciels pouvant dérouler dans un processeur dans le système d'ordinateur numérique (501), et
- le récepteur (311) comprend un moyen de mémorisation (709) pour logiciels à exécuter dans le processeur, et
- dans lequel le moyen de récupération système (307, 505) comprend en outre un moyen pour mémoriser les logiciels exécutables dans le moyen de mémorisation (709).
